# EUROPÄISCHE PATENTSCHRIFT

(11) **EP 2 113 367 B1**
(45) Veröffentlichungstag und Bekanntmachung des Hinweises auf die Patenterteilung: **03.07.2013**
(21) Anmeldenummer: 09155576.3
(22) Anmeldetag: 19.03.2009
(51) Int. Cl.: B29C 49/42, B29C 49/06, B29C 49/48

(54) **Verfahren zur Übergabe von Vorformlingen an eine Blasmaschine und Formenträger für mindestens einen Vorformling**
Method for transferring performs to a blowing machine and form holder for at least one preform
Procédé de transfert de préformes sur une souffleuse et support de formes pour au moins une préforme

(30) Priorität: 30.04.2008 DE 102008021526
(43) Veröffentlichungstag der Anmeldung: 04.11.2009
(73) Patentinhaber: Krones AG, 93073 Neutraubling (DE)
(72) Erfinder: Blochmann, Erik, 93073, Neutraubling (DE); Penninger, Josef, 93083, Oberinkofen (DE); Fleischmann, Hans-Jürgen, 92449, Steinberg am See (DE)
(74) Vertreter: Reichert, Werner Franz

(56) Entgegenhaltungen:
- WO-A1-01/07235
- DE-A1-102005 008 685

## Beschreibung

Die vorliegende Erfindung betrifft ein Verfahren zur Übergabe von Vorformlingen an eine Blasmaschine. Insbesondere betrifft die Erfindung ein Verfahren zur Übergabe von Vorformlingen an eine Blasmaschine, die eine Vielzahl von Formenträgern umfasst, von denen jeder mindestens eine mehrteilige Blasform trägt. Dabei wird ein jeweiliger Vorformling entlang einer Übergabestrecke an die Blasmaschine übergeben. Dazu wird zunächst der dem Vorformling zugeordnete Formenträger bei Erreichen der Übergabestrecke geöffnet. Ein fertig geformter Flüssigkeitsbehälter wird dabei gegebenenfalls aus der Blasform entnommen, bevor der Vorformling eingesetzt wird. Der sich ebenfalls an der Übergabestrecke befindliche Vorformling wird dann an ein dem geöffneten Formenträger zugeordnetes Halteelement übergeben. Anschließend wird der Vorformling in der Blasform des Formenträgers positioniert und der Formenträger danach geschlossen. Diese Schritte werden für jeden der Vorformlinge ausgeführt, die der Blasmaschine über die Übergabestrecke zugeführt werden.

Ferner betrifft die Erfindung einen Formenträger für mindestens einen Vorformling. Insbesondere betrifft die Erfindung einen Formenträger innerhalb einer Blasmaschine, wobei in dem Formenträger mindestens eine mehrteilige Blasform angeordnet ist und der Formenträger mindestens ein Halteelement umfasst.

Eine Blasmaschine wird insbesondere zum Streckblasen von Vorformlingen verwendet. Durch Streckblasen der Vorformlinge werden daraus Flüssigkeitsbehälter, beispielsweise Flaschen, hergestellt. Die Blasmaschine selbst umfasst mehrere Blasformen, wobei jede Blasform in einem Formenträger sitzt. Für das Streckblasen von Vorformlingen für Kunststoffflaschen werden Blasformen verwendet, in die ein Vorformling mit Überdruck im Innern der Blasform formgeblasen, das heißt auskonturiert, wird. Die Blasform besteht mindestens aus zwei Blasformhälften, die im Formenträger gehaltert sind. Dabei umfasst der Formenträger zwei Formenträgerhälften, die um eine gemeinsame Achse schwenkbar gelagert sind. Durch Schwenken um diese Achse können die Formenträgerhälften geöffnet und verschlossen werden. In die geöffneten Formenträgerhälften und somit auch in die geöffnete Blasform kann ein Vorformling eingesetzt beziehungsweise aus der geöffneten Blasform eine formgeblasene Flasche entnommen werden. Die Ausgestaltung eines solchen Formenträgers ist beispielsweise in der Europäischen Patentschrift EP 1 276 598 B1 offenbart.

Während der Phase der Übergabe des Vorformlings an den Formenträger der Blasmaschine und entsprechend während der Phase der Entnahme der Flasche wird der Vorformling bzw. der Behälter entlang einer Übergabestrecke (Begleitstrecke) geführt. Bei der Übergabe greift üblicherweise eine Übergabevorrichtung zumindest einen Teil des Halsbereichs des Vorformlings. Die Übergabestrecke führt sowohl entlang eines Teils des Umfangs der Blasmaschine als auch entlang eines Teils des Umfangs einer sich vorher beziehungsweise nachher anschließenden Verarbeitungseinrichtung. Auf diese Weise wird der Vorformling von einem Polarkoordinatensystem der Verarbeitungseinrichtung in ein anderes Polarkoordinatensystem der Blasmaschine verbracht beziehungsweise der Vorformling aus dem Polarkoordinatensystem der Blasmaschine in das Polarkoordinatensystem der Verarbeitungseinrichtung verbracht.

Während der Übergabe beziehungsweise Entnahme weicht die Bewegungsrichtung des Vorformlings teilweise stark von der der Blasmaschine beziehungsweise der Verarbeitungseinrichtung ab. Dadurch ist der Vorformling bei einer idealerweise konstant hohen Geschwindigkeit einer hohen Belastung ausgesetzt, die zu Schäden am Vorformling führen kann. Die sichere Übergabe des Vorformlings kann auch durch starke Änderungen der Bewegungsrichtung des Vorformlings gefährdet sein. Gleiches gilt auch für die Entnahme der Flüssigkeitsbehälter. Es steigen jedoch die Anforderungen an die Produktivität und damit an die Geschwindigkeit, mit der die Vorformlinge beziehungsweise Flüssigkeitsbehälter verarbeitet werden sollen, so dass sich die oben genannten Probleme gegebenenfalls verstärken.

Die deutsche Patentanmeldung DE 10 2005 008 685 A1 offenbart ein Verfahren und eine Vorrichtung zur Blasformung von Behältern, die eine kompakte Konstruktion unterstützen. Vorformlinge werden im Bereich einer Heizstrecke erwärmt. Anschließend werden die erwärmten Vorformlinge an ein rotierendes Blasrad übergeben, auf dem sie durch Streckblasen innerhalb von Blasformen zu den Behältern umgeformt werden. Dabei werden die Vorformlinge von der Heizstrecke bis auf einen geringen Abstand zum Blasrad transportiert. Die Heizstrecke weist in einem Übergabebereich der Vorformlinge von der Heizstrecke zum Blasrad einen geringen Abstand zum Blasrad auf. Mindestens eine Übergabeeinrichtung wird zur direkten Übergabe der Vorformlinge von der Heizstrecke an das Blasrad verwendet. Eine Übergabe der Vorformlinge wird also direkt von der Heizstrecke zum Blasrad durchgeführt ohne Verwendung eines Transfersterns, Übergaberads oder anderen geeigneten Transfermittels, der beziehungsweise das zwischen der Heizvorrichtung zum Erwärmen der Vorformlinge und dem Blasrad zum Streckblasen der Vorformlinge zu den Behältern beweglich angeordnet ist. Die Übergabeeinrichtung umfasst vorzugsweise eine Greifvorrichtung, die den Vorformling von der Heizstrecke zum Blasrad und/oder den aus dem Vorformling hergestellten Behälter an ein Übergaberad für die Ausgabe der Behälter verbringt.

Die deutsche Patentanmeldung DE 199 06 438 A1 offenbart ein Verfahren und eine Vorrichtung zur Übergabe von Behältern im Anschluss an eine Blasformung der Behälter aus einem thermoplastischen Material. Die geblasenen Behälter werden nach der Blasformung von einem Ausgaberad einer Ausgabestrecke mit mindestens zwei voneinander getrennten Transportwegen zugeführt. Die Behälter werden dem Ausgaberad in Umfangsrichtung des Ausgaberades hintereinander zugeführt. Eine Einleitung der Behälter in die Ausgabestrecke erfolgt nach Durchführung einer Schwenkbewegung in radialer Richtung relativ zu einem Mittelpunkt des Ausgaberades im Wesentlichen mit nebeneinander angeordneten Behältern. Das Ausgaberad weist mindestens ein Halteelement zur gleichzeitigen Halterung von mindestens zwei geblasenen Behältern auf. Die Halteelemente sind relativ zum Ausgaberad derart positionsveränderlich angeordnet, dass Aufnahmen des Halteelements für die Behälter bei einer Eingabe der Behälter in Umfangsrichtung des Ausgaberades hintereinander und bei einer Abgabe der Behälter in Umfangsrichtung nebeneinander angeordnet sind. Im Bereich des Ausgaberades kann mit der Erfindung eine Handhabung der geblasenen Behälter mit hoher Zuverlässigkeit sowie hoher Geschwindigkeit erfolgen.

Aufgabe der Erfindung ist, ein Verfahren zu schaffen, das eine schnelle und sichere Übergabe und/oder Entnahme eines Bearbeitungsgegenstands an einen beziehungsweise aus einem Formenträger einer Blasmaschine ermöglicht.

Die internationale Patentanmeldung WO 2001/07235 A1 offenbart ein Verfahren zur Übergabe einer Vielzahl von Vorformlingen an eine Blasmaschine, die eine Vielzahl von Formenträgern umfasst, von denen jeder mindestens eine mehrteilige Blasform trägt, wobei die Vorformlinge entlang einer Übergabestrecke an die Blasmaschine übergeben werden. Der Formenträger für mindestens einen Vorformling ist innerhalb der Blasmaschine angeordnet und umfasst mindestens eine mehrteilige Blasform und mindestens ein Halteelement. Das mindestens eine Halteelement bildet zumindest einen Teil der mindestens einen mehrteiligen Blasform bei geschlossenem Zustand des Formenträgers.

Aufgabe der Erfindung ist, ein Verfahren zu schaffen, das eine schnelle und sichere Übergabe und/oder Entnahme eines Bearbeitungsgegenstands an einen beziehungsweise aus einem Formenträger einer Blasmaschine ermöglicht.

Die obige Aufgabe wird gelöst durch ein Verfahren, dass die Merkmale des Anspruchs 1 umfasst.

Eine weitere Aufgabe der Erfindung ist, einen in einer Blasmaschine verwendeten Formenträger für einen Bearbeitungsgegenstand zu schaffen, so dass der Formenträger eine schnelle und sichere Übergabe an den Formenträger und/oder eine schnelle und sichere Entnahme des Bearbeitungsgegenstands aus dem Formenträger ermöglicht.

Die obige Aufgabe wird durch einen Formenträger gelöst, der die Merkmale des Anspruchs 7 umfasst.

Das erfindungsgemäße Verfahren, gemäβ dem Anspruch 1, dient der Übergabe einer Vielzahl von Vorformlingen an eine Blasmaschine, die eine Vielzahl von erfindungsgemäßen Formenträgern umfasst. Jeder Formenträger trägt mindestens eine mehrteilige Blasform. Die Vorformlinge werden, wie oben beschrieben, entlang einer Übergabestrecke an die Blasmaschine übergeben. Die Formenträger werden bei Erreichen der Übergabestrecke, vorzugsweise noch vor Erreichen der Übergabeposition, für den Vorformling geöffnet, wodurch die Übergabestrecke für den Vorformling erheblich verkürzt wird. Je ein sich ebenfalls an der Übergabestrecke befindlicher Vorformling wird an ein dem jeweiligen geöffneten Formenträger zugeordnetes Halteelement an der Übergabeposition übergeben.

Umfasst ein Formenträger in einer Ausführungsform des Formenträgers zwei Blasformen für zwei Vorformlinge, so ist jeder Blasform je ein Halteelement zugeordnet. Nachfolgend werden ohne Einschränkung der Erfindung nur die Ausführungsformen mit einer Blasform für einen Vorformling je Formenträger beschrieben.

Der Vorformling wird nun in der Blasform des Formenträgers positioniert und dann wird der Formenträger mit dem darin positionierten Vorformling geschlossen. Der besondere Vorteil der Erfindung besteht darin, dass ein Teil der Blasform im geschlossenen Zustand des Formenträgers von dem Halteelement gebildet wird. Somit wirkt das Halteelement, insbesondere ein Teil seiner Unterseite, bei der Umformung der Vorformlinge in Behälter während des Streckblasvorgangs mit. Dabei halten die Halteelemente die Vorformlinge an jeweils einer vorbestimmten Position innerhalb der Blasformen. Durch das Halteelement wird die oben beschriebene Übergabestrecke verkürzt und somit der Vorformling geringeren Belastungen ausgesetzt.

Die vorher beschriebenen Schritte werden für jeden der Vorformlinge wiederholt, die der Blasmaschine über die Übergabestrecke zugeführt werden.

Bei einer Ausführungsform des erfindungsgemäßen Verfahrens wird der Vorformling derart im Halteelement des Formenträgers abgesetzt, dass eine Achse des Vorformlings im Wesentlichen parallel zur Achse der Blasform des Formenträgers ist. In weiteren Ausführungsformen der Erfindung wird der jeweilige Vorformling radial bezüglich seiner Querschnittsfläche und/oder axial bezüglich der Achse des Vorformlings fixiert. Dazu sind diverse Ausführungsformen des Formenträgers denkbar, die in späteren Abschnitten beschrieben werden.

In einer Ausführungsform des erfindungsgemäßen Verfahrens werden die aus den Vorformlingen nach erfolgtem Streckblasvorgang hergestellten Behälter aus den jeweiligen Halteelementen der Formenträger entnommen und an eine sich anschließende Verarbeitungseinrichtung übergeben. Das oben beschriebene Positionieren und/oder Stützen der Vorformlinge in den Halteelementen und/oder das Entnehmen der aus den Vorformlingen hergestellten Behälter aus den Halteelementen kann automatisch gesteuert werden.

Der erfindungsgemäße Formenträger, gemäß dem Anspruch 7, ist innerhalb der oben beschriebenen Blasmaschine angeordnet. In dem Formenträger sind ein oder mehrere Blasformen für je einen Vorformling angeordnet. Jede der Blasformen ist mehrteilig und umfasst mindestens ein Halteelement. Dabei bildet das Halteelement zumindest einen Teil der jeweiligen mehrteiligen Blasform, wenn der Formenträger geschlossen ist. Üblicherweise ist ein erstes Ende des Halteelements mit einer Achse der jeweiligen Blasform verbunden. Ein zweites Ende des Halteelements hat eine Halterung für den Vorformling ausgebildet, beispielsweise eine Zange, die den Vorformling haltert. Falls jeder Vorformling einen Tragring, auch Neckring genannt, gemäß dem Stand der Technik ausgebildet hat, haltert die Halterung den Vorformling entlang seines Tragrings.

Dadurch, dass das Halteelement in geschlossenem Zustand des Formenträgers Teil der Blasform ist, wirkt das Halteelement zumindest teilweise bei der Formgebung des Vorformlings in dem Formenträger während des Streckblasvorgangs mit, insbesondere bei der Formgebung in einem Bereich um den Tragring zwischen Kopfbereich und Rumpf des Vorformlings.

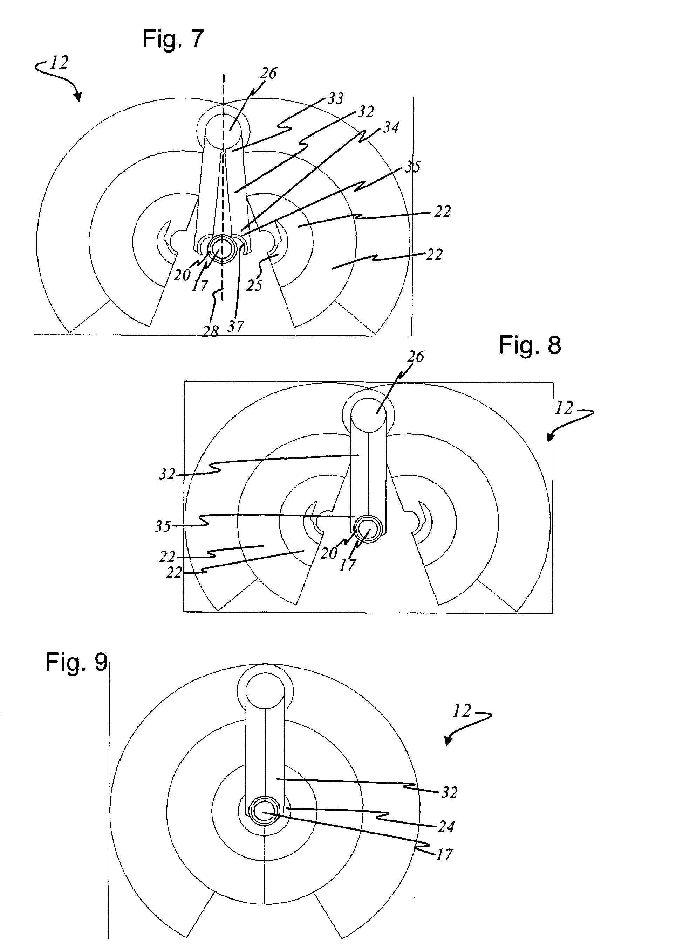

Erfindungsgemäß ist das Halteelement mehrteilig. Insbesondere kann es aus zwei bewegbaren Halteelementhälften bestehen, die eine Zange bilden. In geöffnetem Zustand der Zange wird der Vorformling in die Zange eingeführt. Alternativ bewegt sich die Zange und greift aktiv den Vorformling. In geschlossenem Zustand der Zange haltert diese den Vorformling sicher. Die Länge des inneren Rands der Zange kann im Gegenteil zum einteiligen Halteelement nun mehr als die Hälfte des Umfangs des Vorformlings betragen (siehe Figur 8), da die zweiteilige Zange im Gegensatz zum einteiligen Halteelement geöffnet werden kann. Während des Öffnens der Zange entsteht eine im Vergleich zum Durchmesser des Vorformlings breitere Öffnung, die ausreicht, um den Vorformling zu greifen.

Blasformen aus dem Stand der Technik umfassen oft jeweils eine sogenannte Neckplatte, auf dem der Tragring des jeweiligen Vorformlings lückenlos abgesetzt ist. Solch eine Neckplatte bildet den oberen Abschluss der Blasform. In einer Ausführungsform des erfindungsgemäßen Formenträgers wird die Neckplatte als Halteelement für den Vorformling verwendet. Die Neckplatte besteht aus zwei Neckplattenhälften, wobei jede Neckplattenhälfte auf dem oberen Ende jeweils einer Hälfte der Blasform angeordnet ist. Sind die beiden Hälften der Blasform geschlossen, sind auch die beiden Neckplattenhälfte geschlossen. In geschlossenem Zustand bilden die beiden Neckplattenhälften die Neckplatte, die mindestens einen Umfangsbereich des in der Blasform eingesetzten Vorformlings umschließt. Die Neckplattenhälften können jeweils fest an der jeweiligen Hälfte der Blasform montiert sein.

Ist das Halteelement fest am Formenträger montiert, beispielsweise bei der Ausführungsform mit der Neckplatte als Halteelement oder dem oben beschriebenen einteiligen Haltelement, ist es von Vorteil, jeder Blasform zusätzlich ein Stützelement zuzuordnen, durch das der in der Blasform positionierte Vorformling axial bezüglich seiner Achse fixiert beziehungsweise unterstützt wird. Das Stützelement ist oberhalb des in der Blasform befindlichen Vorformlings angeordnet und hält und führt so von oben den Kopf des Vorformlings. Die Unterseite des Stützelements hält und führt also das obere Ende des Vorformlings. Solch ein Stützelement ist insbesondere dann sinnvoll, wenn ansonsten der Vorformling nur radial in der Blasform gestützt wird und der Tragring des Vorformlings nicht auch anderweitig von oben geklemmt wird.

Die Halterung kann eine Auflage und einen Anschlag für den Tragring ausgeformt haben, so dass der Tragring des Vorformlings auf der Auflage liegt und an seinem äußeren Rand radial durch den Anschlag positioniert ist. Der Anschlag kann auch als Nut ausgeformt sein, so dass der Tragring in der Nut des Anschlags eingeklemmt werden kann.

Im Folgenden sollen Ausführungsbeispiele die Erfindung und ihre Vorteile anhand der beigefügten Figuren näher erläutern.

Figur 1 zeigt eine schematische Darstellung einer Vorrichtung gemäß dem Stand der Technik mit einer Blasmaschine, die mit einem Ofen verbunden ist, der der Blasmaschine die Vorformlinge mit einer definierten Temperatur zuführt.

Figur 2 zeigt eine schematische Darstellung einer Ausführungsform eines einteiligen Halteelements, das einen Vorformling von einer Eingabeposition der Blasmaschine über eine Übergabestrecke an die Blasmaschine übergibt.

Figur 3 zeigt eine Draufsicht eines geöffneten Formenträgers gemäß einer Ausführungsform die nicht Teil der Erfindung ausmacht, wobei ein einteiliges Halteelement vorgesehen ist.

Figur 4 zeigt eine Draufsicht auf den geschlossenen Formenträger nach Figur 3.

Figur 5 zeigt eine Perspektivansicht des geöffneten Formenträgers nach Figur 3 mit dem Vorformling.

Figur 6 zeigt eine Perspektivansicht des geschlossenen Formenträgers nach Figur 3 mit dem Vorformling.

Figur 7 zeigt eine Draufsicht eines geöffneten Formenträgers gemäß der Ausführungsform der Erfindung, wobei ein zweiteiliges Halteelement vorgesehen ist.

Figur 8 zeigt eine Draufsicht des geöffneten Formenträgers nach Figur 7, wobei das Halteelement geschlossen ist.

Figur 9 zeigt eine Draufsicht des Formenträgers nach Figur 7, wobei der Formenträger und das Halteelement geschlossen sind.

Figur 10 zeigt eine Perspektivansicht des Formenträgers nach Figur 7, wobei der Formenträger und das Halteelement geöffnet sind.

Figur 11 zeigt eine Perspektivansicht des Formenträgers nach Figur 7, wobei der Formenträger geöffnet und das Halteelement geschlossen ist.

Figur 12 zeigt eine Perspektivansicht des Formenträgers nach Figur 7, wobei der Formenträger und das Halteelement geschlossen sind.

Figur 13 zeigt eine Draufsicht eines geöffneten Formenträgers gemäß einer weiteren Ausführungsform die nicht Teil der Erfindung ausmacht, wobei eine Neckplatte als Halteelement dient.

Figur 14 zeigt eine Draufsicht des geöffneten Formenträgers nach Figur 13, wobei das Halteelement geschlossen ist.

Figur 15 zeigt eine Draufsicht des Formenträgers nach Figur 13, wobei der Formenträger und das Halteelement geschlossen sind.

Figur 16 zeigt eine Perspektivansicht des Formenträgers nach Figur 13, wobei der Formenträger und das Halteelement geöffnet sind.

Figur 17 zeigt eine Perspektivansicht des Formenträgers nach Figur 13, wobei der Formenträger nicht vollständig geschlossen und das Halteelement vollständig geschlossen ist.

Figur 18 zeigt eine Perspektivansicht des Formenträgers nach Figur 13, wobei der Formenträger und das Halteelement geschlossen sind.

Figur 19 zeigt eine Seitenansicht eines Halteelements des Formenträgers mit einem Stützelement.

Figur 20 zeigt eine Seitenansicht eines Halteelements, das einen Anschlag mit einer Nut ausgeformt hat.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

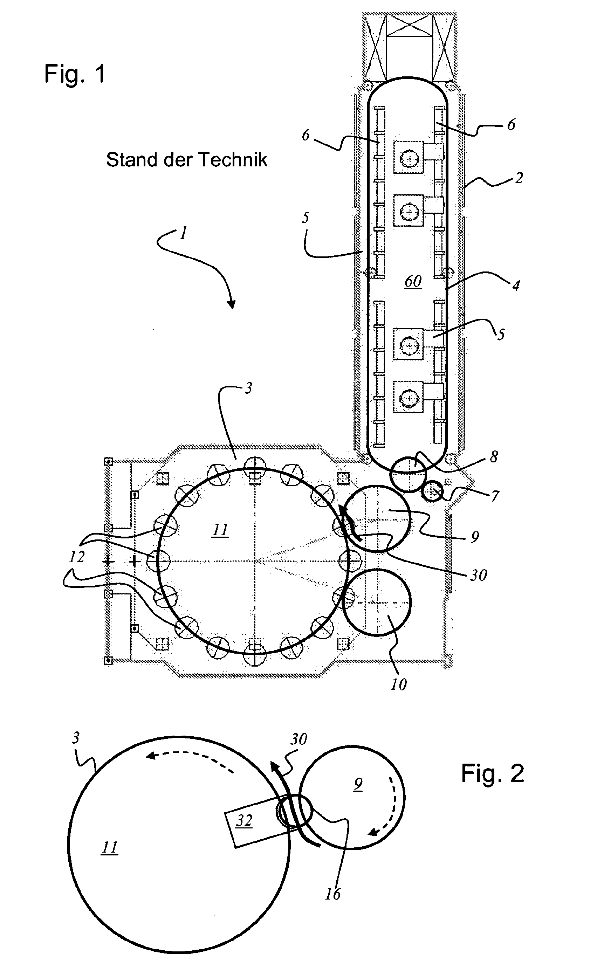

Figur 1 zeigt eine schematische Ansicht einer Vorrichtung 1 gemäß dem Stand der Technik, mit der Behälter (nicht dargestellt), bspw. Kunststoffflaschen, im Wesentlichen durch ein Streckblasverfahren hergestellt werden können. Die Vorrichtung 1 besteht im Wesentlichen aus einer Verarbeitungseinrichtung 60, die als ein Ofen 2 ausgebildet ist. In dem Ofen 2 werden Vorformlinge (nicht dargestellt) für die herzustellenden Behälter auf eine bestimmte Temperatur gebracht, damit aus diesen Vorformlingen die Behälter im Blasverfahren beziehungsweise Streckblasverfahren hergestellt werden können. Mit dem Ofen 2 ist die Blasmaschine 3 verbunden. In dem Ofen 2 ist eine Fördereinrichtung 4 vorgesehen, die eine Vielzahl von Vorformlingen an einer Heizeinrichtung 5 vorbeiführt. Zum Inneren des Ofens 2 hin ist die Transporteinrichtung 4 mittels Wärme reflektierenden Kacheln 6 abgeschirmt. An einer Übergabeposition 7 werden die Vorformlinge in den Ofen 2 eingeleitet. An einer Ausgabeposition 8 werden die erwärmten Vorformlinge an eine Eingabeposition 9 für die Blasmaschine 3 übergeben.

Die Vorformlinge werden von der Eingabeposition 9 entlang einer als gebogener Pfeil dargestellten Übergabestrecke 30 an die Blasmaschine 3 übergeben.

In der in Figur 1 gezeigten Darstellung umfasst die Blasmaschine 3 eine Transporteinrichtung 11, an der eine Vielzahl von Formenträgern 12 angeordnet ist. In der hier gezeigten schematischen Darstellung der Blasmaschine 3 ist die Transporteinrichtung 11 als Rad ausgebildet. Es ist ebenso denkbar, dass die Transporteinrichtung 11 im Wesentlichen linear ausgebildet ist, ohne den Schutzbereich der Erfindung zu verlassen.

An einer Ausgabeposition 10 der Blasmaschine 3 werden die fertigen Behälter zu einer weiteren Verarbeitungseinrichtung (nicht dargestellt), beispielsweise einer Abfüllanlage, ausgegeben.

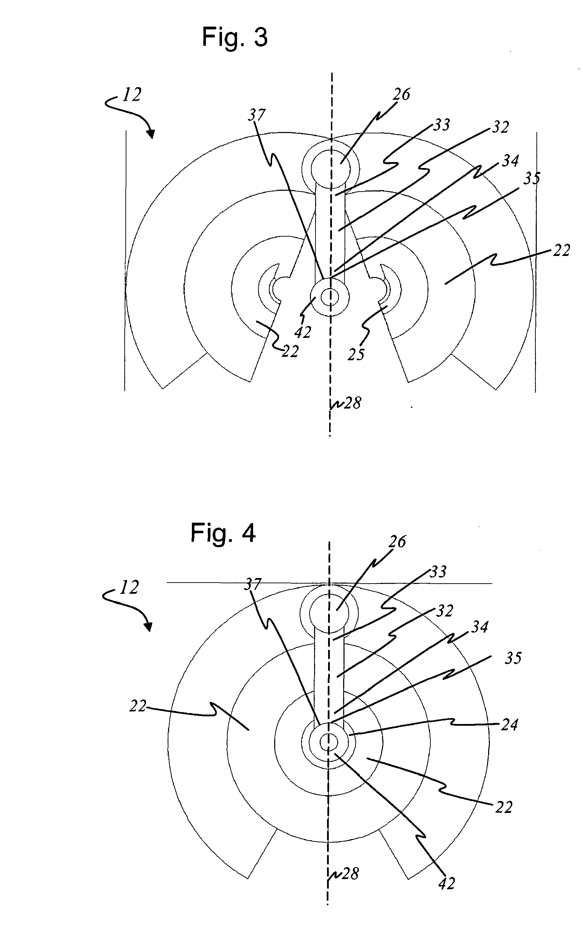

Figur 2 zeigt eine schematische Darstellung einer Ausführungsform eines Halteelements 32 eines Formenträgers 12 (siehe beispielsweise Figur 3). Das Halteelement 32 übergibt einen Vorformling 16 von der Eingabeposition 9 der Blasmaschine 3 über die Übergabestrecke 30 an die Blasmaschine 3. Das Halteelement 32 ist in der hier dargestellten Ausführungsform im Wesentlichen einteilig. Über die Transporteinrichtung 11 der Blasmaschine 3 wird der Vorformling 16 dem Streckblasvorgang zugeführt.

Wie oben beschrieben, ändert sich während der Phase der Übergabe des Vorformlings 16 seine Bewegungsrichtung, so dass die sich daraus ergebende Übergabestrecke 30 nichtlinear und kurvenförmig verläuft.

In den in den Figuren 3 bis 20 gezeigten Darstellungen werden unterschiedliche Ausführungsformen des erfindungsgemäßen Formenträgers 12 zur besseren Verdeutlichung des Formenträgers 12 und des erfindungsgemäßen Verfahrens in der Draufsicht, Seitenansicht und Perspektivansicht, jeweils geöffnet und geschlossen dargestellt.

Figur 3 zeigt eine Draufsicht auf einen geöffneten Formenträger 12 mit einer mehrteiligen Blasform 22 und einem einteiligen Halteelement 32. Der Formenträger 12 ist ebenfalls mehrteilig aufgebaut und trägt die mehrteilige Blasform 22, die in den hier dargestellten Ausführungsformenaus zwei Hälften besteht, die durch Schwenken um eine Achse 26 des Formenträgers 12 geöffnet und geschlossen werden.

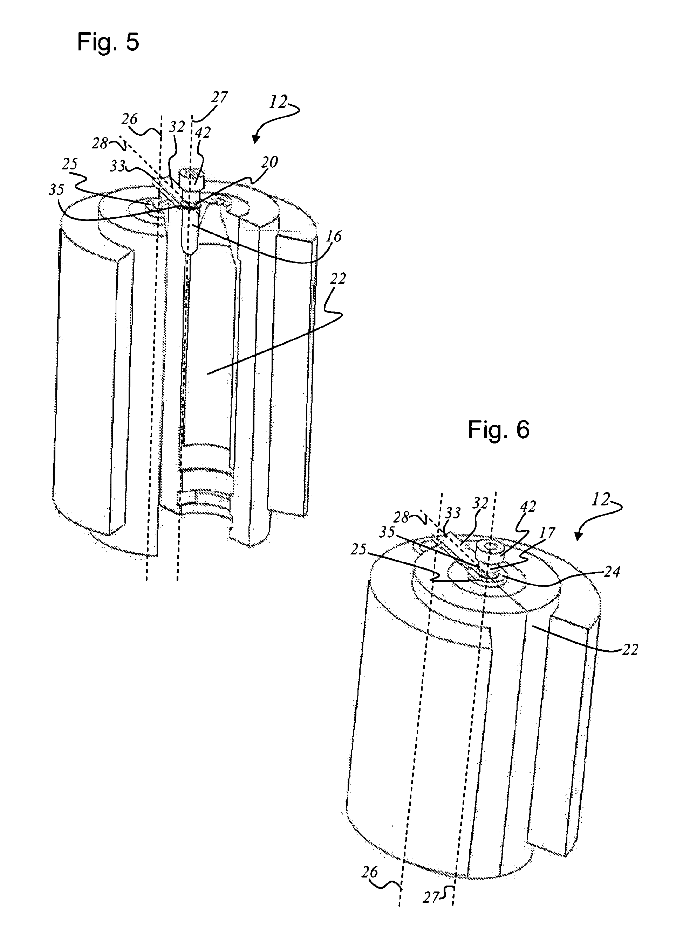

Es ist die Situation des erfindungsgemäßen Verfahrens zur Übergabe des Vorformlings 16 dargestellt, bei der der Formenträger 12 zunächst um die Achse 26 auseinandergeschwenkt und dann der Vorformling 16 an den Formenträger 12 übergeben worden ist. Eine Neckplatte 24 der Blasform 22 bildet den oberen Abschluss der Blasform 22. Im nächsten Schritt ist der Formenträger 12 zu schließen (siehe Figuren 4 und 6), um danach mit dem Streckblasvorgang für den Vorformling 16 zu beginnen.

Das Halteelement 32 ist zwischen der Achse 26 und dem im Formenträger 12 positionierten Vorformling 16 angeordnet. Dabei ist das erste Ende 33 des Halteelements 32 mit der Achse 26 verbunden und das zweite Ende 34 hat eine Halterung 35 ausgeformt, deren innerer Rand 37 lückenlos mit einem Teil des Vorformlings 16 abschließt. Das Halteelement 32 und somit auch der im Halteelement 32 gehaltene Vorformling 16 sind im Wesentlichen in einer Symmetrieachse 28 des Formenträgers 12 angebracht. Von oben und parallel zur Achse 26 wird der Vorformling 16 durch ein Stützelement 42 gestützt (siehe auch Figuren 5 bis 6). In der Draufsicht ist der Vorformling 16 mit seinem Tragring 20 nicht sichtbar, weil das Stützelement 42 über dem Vorformling 16 am Halteelement 32 angeordnet ist. Das Stützelement 42 weist in der hier dargestellten Form in seiner Mitte einen Auslass auf (ohne Bezugszeichen). Dieser Auslass wirkt beispielsweise mit einem Kolben zusammen, der eine Kraft auf das Stützelement 42 ausübt und damit das Stützelement 42 in Richtung des Vorformlings 16 drückt.

Der Tragring 20 des Vorformlings 16 liegt auf einem Bereich des zweiten Endes 34 des Halteelements 32 auf. Insgesamt ist dadurch der Vorformling 16 sicher während des geöffneten Zustands des Formenträgers 12 gehaltert.

Die Länge des inneren Rands 37 der Halterung 35 beträgt weniger als die Hälfte des Umfangs des Vorformlings 16. Zusätzlich ist die Form des inneren Rands 37 der Halterung 35 an die äußere Form des Vorformlings 16 angepasst. Insgesamt passt daher der Vorformling 16 lückenlos in die Halterung 35.

Figur 4 zeigt eine Draufsicht auf den geschlossenen Formenträger 12 mit der Blasform 22 und dem einteiligen Halteelement 32 nach Figur 3. Alle Elemente sind bereits in der Beschreibung zu Figur 3 beschrieben. Es ist die Situation des erfindungsgemäßen Verfahrens zur Übergabe des Vorformlings 16 dargestellt, bei der der Formenträger 12 um die Achse 26 zusammengeschwenkt worden ist, nachdem der Vorformling 16 von dem Halteelement 32 gegriffen wurde. Somit ist der Formenträger 12 nun geschlossen. Das Halteelement 32 ist sicher in der ebenfalls geschlossenen Blasform 22 positioniert und Teil der Neckplatte 24 der Blasform 22 und damit auch Teil der Blasform 22. Der Streckblasvorgang für den Vorformling 16 kann anschließend beginnen. Der Vorformling 16 (nicht dargestellt) befindet sich in der Blasform 22 unterhalb des Stützelements 42 wie oben bereits beschrieben.

Figur 5 zeigt eine Perspektivansicht des geöffneten Formenträgers 12 nach Figur 3 mit dem Vorformling 16. Es ist die Situation des Verfahrens zur Übergabe des Vorformlings 16 dargestellt, bei der der Formenträger 12 zunächst um die Achse 26 auseinandergeschwenkt und dann der Vorformling 16 an den Formenträger 12 übergeben worden ist. Eine Neckplatte 24 der Blasform 22 bildet den oberen Abschluss der Blasform 22. Im nächsten Schritt ist der Formenträger 12 zu schließen (nicht dargestellt), um danach mit dem Streckblasformgang für den Vorformling 16 zu beginnen. Alle sonstigen Elemente sind bereits in der Beschreibung zu Figur 3 und 4 beschrieben. Die Achse 26 des Formenträgers 12 und eine Längsachse 27 des Vorformlings 16 sind im Wesentlichen parallel.

Figur 6 zeigt eine Perspektivansicht des geschlossenen Formenträgers 12 nach Figur 3 und 5 mit dem Vorformling 16. Es ist die Situation des Verfahrens zur Übergabe des Vorformlings 16 dargestellt, bei der der Formenträger 12 um die Achse 26 zusammengeschwenkt worden ist, nachdem der Vorformling 16 in das Halteelement 32 gesetzt wurde. Wie oben bereits beschrieben, kann der Streckblasvorgang für den Vorformling 16 nun beginnen. Das Halteelement 32 ist bei der dargestellten Ausführungsform insbesondere Teil der Neckplatte 24 der Blasform 22. Alle sonstigen Elemente sind bereits in der Beschreibung zu den Figuren 3, 4 und 5 beschrieben.

Für die nachfolgenden Beschreibungen der einzelnen Verfahrensschritte zur Übergabe der Vorformlinge 16 an die Blasmaschine 3 und den erfindungsgemäßen Formenträger 12 wird teilweise auf die Bezeichnung derjenigen Elemente des Formenträgers 12 verzichtet, die bereits in den vorherigen Figurenbeschreibungen beschrieben wurden, um die Übersichtlichkeit der nachfolgenden Figuren zu bewahren.

Figur 7 zeigt eine Draufsicht eines geöffneten Formenträgers 12 gemäß der Ausführungsform der Erfindung, wobei der Formenträger 12 eine Blasform 22 mit einem zweiteiligen Halteelement 32 umfasst, das geöffnet ist. Das zweiteilige Halteelement 32 ist als Zange ausgebildet, die zum Greifen des Vorformlings 16 geöffnet ist. Die Länge des inneren Rands 37 der Halterung 35 ist länger als die Hälfte des Umfangs des Vorformlings 16. Ansonsten sind alle Elemente in der Beschreibung zu Figur 3 beschrieben.

Figur 8 zeigt eine Draufsicht des geöffneten Formenträgers 12 nach Figur 7, wobei das Halteelement 32 geschlossen wurde, nachdem der Vorformling 16 aktiv vom Halteelement 32 gegriffen wurde. Die Hälften der Blasform 22 sind noch geöffnet. Ansonsten sind alle Elemente in der Beschreibung zu Figur 3 beschrieben.

Figur 9 zeigt eine Draufsicht des Formenträgers 12 nach Figur 7, wobei der Formenträger 12 mitsamt der Blasform 22 geschlossen wurde, nachdem der Vorformling 16 sicher in dem Halteelement 32 positioniert wurde. Ansonsten sind alle Elemente in der Beschreibung zu Figur 4 beschrieben.

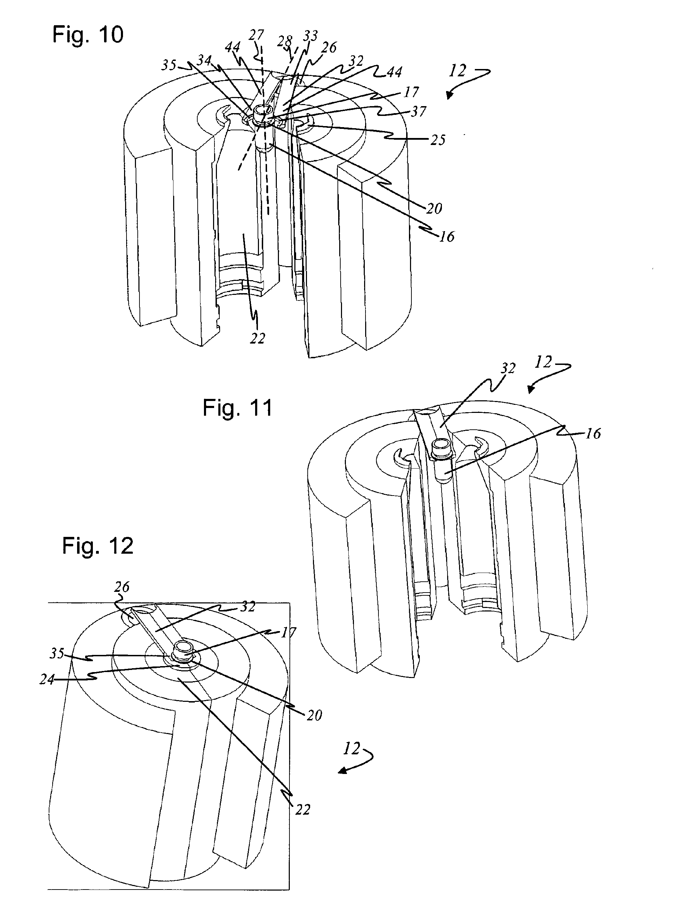

Die Figuren 10, 11 und 12 zeigen Perspektivansichten entsprechend den zu den in den Figuren 7, 8 und 9 beschriebenen Verfahrensschritten.

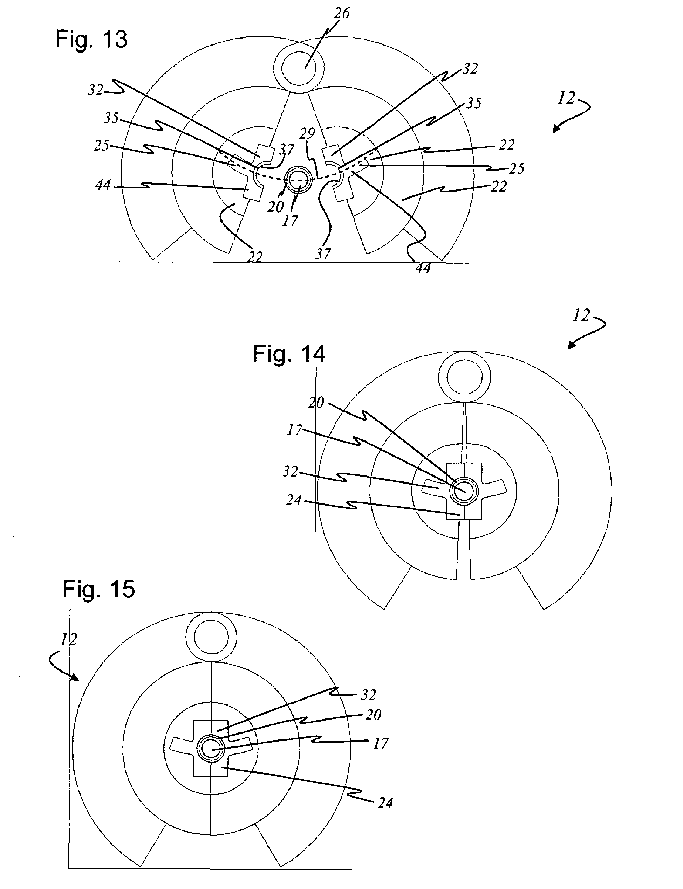

Figur 13 zeigt eine Draufsicht eines geöffneten Formenträgers 12 gemäß einer weiteren Ausführungsform , wobei der Formenträger 12 eine zweiteilige Neckplatte 24 umfasst, die geöffnet ist und das Halteelement 32 für den Vorformling 16 bildet. Vorteil dieser Ausführungsform ist, dass im Gegensatz zu den in den Figuren 3 bis 12 dargestellten Ausführungsformen nicht ein zusätzliches Element als Halteelement 32 für die Blasform 22 zur Verfügung gestellt werden muss, sondern dass die bereits bei der Blasform 22 vorhandene Neckplatte 24 als Halteelement 32 verwendet wird. Wie bei der Ausführungsform in den Figuren 7 bis 12, ist das Halteelement 32 auch hier zweiteilig, bestehend aus den beiden Neckplattenhälften 25. Ebenso sind zum Einführen des Vorformlings 16 in das Halteelement 32 zunächst das Halteelement 32 und der Formenträger 12 geöffnet. Nach sicherem Positionieren des Vorformlings 16 im Halteelement 32 wird das Halteelement 32 geschlossen, wobei die zweiteilige Blasform 22 zum Teil noch geöffnet bleibt (siehe Figur 14). Zum Schluss wird auch der Formenträger 12 vollständig geschlossen (siehe Figur 15).

Beim Öffnen und Schließen der Neckplattenhälften 25 werden diese entlang eines Kreisbogenabschnitts 29 geführt, wobei der Mittelpunkt des zugehörigen Kreises in der Achse 26 liegt.

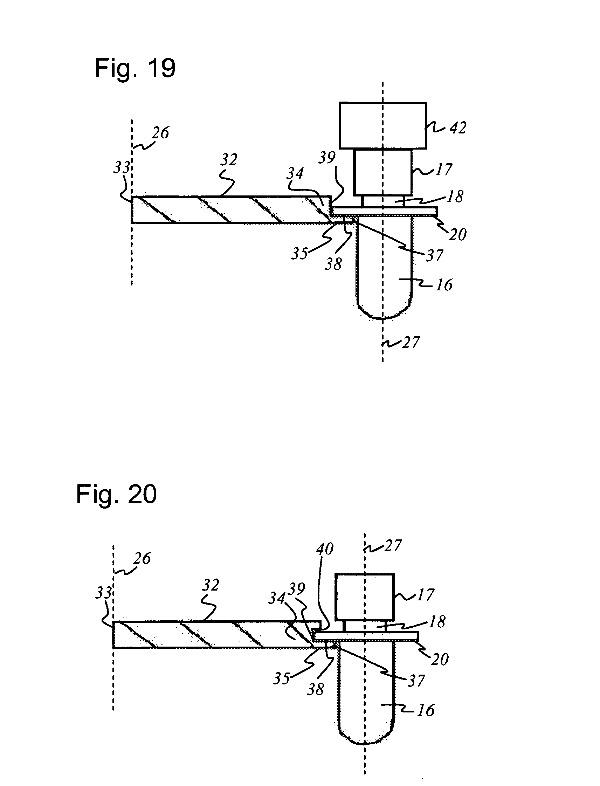

Sind die Neckplattenhälften 25 fest an der jeweiligen Hälfte der Blasform 22 montiert und ist keine Stützung und Führung des Vorformlings 16 entlang der Längsachse 27 vorgesehen, beispielsweise durch ein Stützelement 42 (nicht dargestellt in Fig. 13 bis 18; siehe Figur 19) oder eine Nut 40 (siehe Figur 20), so sollten zum sicheren Positionieren und Haltern des Vorformlings 16 die beiden Neckplattenhälften 25 gleichzeitig den Vorformling 16 greifen. Ist dagegen zusätzlich zur radialen Stützung auch eine längsaxiale Stützung des Vorformlings 16 vorgesehen, so reicht es aus, den Vorformling 16 zunächst nur einer der beiden Neckplattenhälften 25 zuzuführen, dort sicher zu positionieren und zu haltern und erst anschließend die Neckplattenhälften 25 zu schließen.

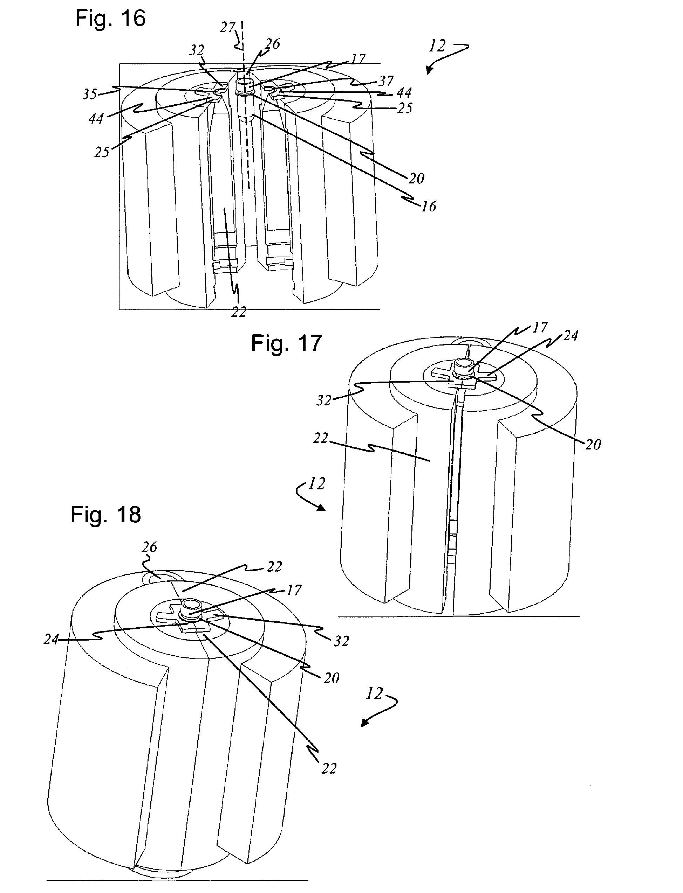

Die Figuren 16, 17 und 18 zeigen Perspektivansichten entsprechend den zu den in den Figuren 13, 14 und 15 beschriebenen Verfahrensschritten.

Figur 19 zeigt eine Seitenansicht eines Halteelements 32 einer Ausführungsform des erfindungsgemäßen Formenträgers 12, wobei ein Stützelement 42 den Vorformling 16 von oben führt und stützt. Das Halteelement 32 haltert den Vorformling 16. In der Ausführungsform hat die Halterung 35 am zweiten Ende 34 des Halteelements 32 einen Anschlag 39 ausgeformt, so dass der Tragring 20 des Vorformlings 16 an seinem äußeren Rand am Anschlag 39 positioniert ist. Die Halterung 35 des Halteelements 32 hat auch eine Auflage 38 ausgeformt, auf der der Tragring 20 liegt. Oberhalb des Tragrings 20 befinden sich der Hals 18 und der Kopf 17 des Vorformlings 16, wobei der Hals 18 und der Kopf 17 während des Streckblasvorgangs nicht deformiert werden dürfen.

Das Stützelement 42 hält den Vorformling 16 von oben entlang der Längsachse 27 des Vorformlings 16. Damit fixiert das Stützelement 42 auch den Tragring 20 des Vorformlings 16 von oben auf dem Halteelement 32. Die Achse 26 der Blasform 22 ist im Wesentlichen parallel zur Längsachse 27 des Vorformlings 16.

Es ist ferner denkbar, dass das Stützelement 42 aktiv den Vorformling 16 in das Halteelement 32 einführt, wenn der Formenträger 12 geöffnet ist. Entsprechend kann das Stützelement 42 aktiv den aus dem Vorformling 16 hergestellten Behälter 21 aus dem Halteelement 32 entnehmen und einer weiteren Verarbeitung zuführen.

Wie oben bereits beschrieben, wird bei einem zweiteiligen Halteelement 32 der Vorformling 16 entweder von beiden Halteelementhälften 44 des Halteelements 32 gleichzeitig gegriffen und das Halteelement 32 geschlossen, oder der Vorformling 16 wird zunächst nur einer Halteelementhälfte 44 zugeführt und danach wird der Vorformling 16 durch Schließen des Halteelements 32 in beiden Halteelementhälften 44 des Halteelements 32 gehaltert.

Das Stützelement 42 eignet sich bei den vorher beschriebenen Ausführungsformen von einteiligen oder zweiteiligen Halteelementen 32 in Zangenform oder als Neckplattenhälften 25 oder anderer mehrteiliger Form immer dann, wenn ansonsten nur eine radiale Führung oder Stützung des Vorformlings 16 vorgesehen ist, jedoch eine längsaxiale Stützung zum sicheren Führen, Positionieren, Haltern und Entnehmen ebenfalls benötigt wird.

Figur 20 zeigt eine Seitenansicht eines Halteelements 32, das an seinem zweiten Ende 34 einen Anschlag 39 mit einer Nut 40 ausgeformt hat. Der Tragring 20 wird somit durch die Nut 40 und die Auflage 38 entlang der Längsachse 27 gestützt und geklemmt, so dass er sicher positioniert ist.

## Patentansprüche

1. Verfahren zur Übergabe einer Vielzahl von Vorformlingen (16) an eine Blasmaschine (3), die eine Vielzahl von Formenträgern (12) umfasst, von denen jeder mindestens eine mehrteilige Blasform (22) trägt, wobei die Vorformlinge (16) entlang einer Übergabestrecke (30) an die Blasmaschine (3) übergeben werden, mit den folgenden Schritten:
• dass mindestens einer der Formenträger (12) bei Erreichen der Übergabestrecke (30) geöffnet wird;
• dass anschließend mindestens ein sich ebenfalls an der Übergabestrecke (30) befindlicher Vorformling (16) an ein dem geöffneten Formenträger (12) zugeordnetes Halteelement (32) übergeben wird;
• dass anschließend der Vorformling (16) in der mindestens einen Blasform (22) des Formenträgers (12) positioniert wird;
• dass anschließend der Formenträger (12) mit dem darin positionierten Vorformling (16) geschlossen wird;
• dass die oben beschriebenen Schritte für jeden der Vorformlinge (16), die der Blasmaschine (3) über die Übergabestrecke (30) zugeführt werden, ausgeführt werden; und
• dass ein Teil der Blasform (22) in geschlossenem Zustand des Formenträgers (12) von dem Halteelement (32) gebildet wird;
**gekennzeichnet dadurch**
• **dass** das Halteelement (32) aus zwei bewegbaren Halteelementhälften (44) besteht und dass in dem geschlossenen Zustand des Halteelements (32) die Halterung (35) ausgebildet wird, wobei eine Länge des inneren Rands (37) der Halterung (35) mindestens die Hälfte des Umfangs des Vorformlings (16) beträgt.

2. Verfahren nach Anspruch 1, wobei zumindest durch jeweils einen Teil einer Unterseite des jeweiligen Haltelements (32) die jeweilige Blasform (22) geschlossen wird und so bei der Formgebung der Vorformlinge (16) zu Behältern (21) mitwirken.

3. Verfahren nach einem der Ansprüche 1 bis 2, wobei jedes Halteelement (32) den jeweiligen Vorformling (16) an jeweils einer vorbestimmten Position innerhalb der jeweiligen Blasform (22) hält.

4. Verfahren nach Anspruch 3, wobei jeder Vorformling (16) einen Tragring (20) ausgebildet hat, mit dem der Vorformling (16) derart in dem Halteelement (32) abgesetzt wird, dass eine Längsachse (27) des Vorformlings (16) parallel zu einer Längsachse (26) des Formenträgers (12) und somit der Blasform (22) ist.

5. Verfahren nach einem der Ansprüche 1 bis 4, wobei die Vorformlinge (16) entlang einer Symmetrieachse (28) des Formenträgers (12) und/oder axial zu der Längsachse (26) des Formenträgers (12) in den Blasformen (22) fixiert werden.

6. Verfahren nach Anspruch 5, wobei jeweils ein der jeweiligen Blasform (22) zugeordnetes Stützelement (42) den jeweiligen Vorformling (16) axial bezüglich seiner Längsachse (27) in der jeweiligen Blasform (22) fixiert, wobei die Unterseite des Stützelements (42) das obere Ende des Vorformlings (16) hält und führt.

7. Formenträger (12) für mindestens einen Vorformling (16), wobei
der Formenträger (12) innerhalb einer Blasmaschine (3) angeordnet ist
und
mindestens eine mehrteilige Blasform (22) und mindestens ein Halteelement (32) für den Vorformling umfasst, und
das mindestens eine Halteelement (32) zumindest einen Teil der mindestens einen mehrteiligen Blasform (22) bei geschlossenem Zustand des Formenträgers (12) bildet,
**dadurch gekennzeichnet, dass**
das Halteelement (32) aus zwei bewegbaren Halteelementhälften (44) besteht, und
im geschlossenen Zustand des Halteelements (32) die Halterung (35) ausgebildet wird, wobei eine Länge eines inneren Rands (37) der Halterung (35) mindestens die Hälfte des Umfangs des Vorformlings (16) beträgt.

8. Formenträger (12) nach Anspruch 7, wobei ein erstes Ende (33) des Halteelements (32) mit einer Längsachse (26) des Formenträgers (12) verbunden ist und dass ein zweites Ende (34) des Halteelements (32) eine Halterung (35) für den Vorformling (16) ausgebildet hat.

9. Formenträger (12) nach Anspruch 8, wobei die Halterung (35) den Vorformling (16) an einem Tragring (20) des Vorformlings (16) haltert.

10. Formenträger (12) nach Anspruch 9, wobei die Halterung (35) eine Auflage (38) und einen Anschlag (39) für den Tragring (20) ausgeformt hat, so dass der Tragring (20) auf der Auflage (38) liegt und an seinem äußeren Rand durch den Anschlag (39) positioniert ist.

11. Formenträger (12) nach Anspruch 10, wobei der Anschlag (39) als Nut (40) ausgeformt ist, so dass der Tragring (20) des Vorformlings (16) in der Nut (40) des Anschlags (39) eingeklemmt ist.

## Claims

1. A method for transferring a plurality of preforms (16) to a blow moulding machine (3) which comprises a plurality of mould carriers (12), each of which carries at least one multi-part blow mould (22), wherein the preforms (16) are transferred along a transfer section (30) to the blow moulding machine (3) comprising the following steps:
• at least one of the mould carriers (12) is opened as it reaches the transfer section (30);
• at least one preform (16), which is likewise located at the transfer section (30), is then transferred to a holding element (32) assigned to the open mould carrier (12);
• the preform (16) is then positioned in the at least one blow mould (22) of the mould carrier (12);
• the mould carrier (12) with the preform (16) positioned therein is then closed;
• the steps described above are carried out for each of the preforms (16) supplied to the blow moulding machine (3) via the transfer section (30); and
• part of the blow mould (22) in the closed state of the mould carrier (12) is
formed by the holding element (32);
**characterized in that**
• the holding element (32) consists of two movable holding element halves (44) and the holder (35) is formed in the closed state of the holding element (32), a length of the inner edge (37) of the holder (35) being at least half the circumference of the preform (16).

2. The method according to claim 1, wherein the respective blow mould (22) is closed at least by a respective part of an underside of the respective holding element (32) and thus said respective blow mould (22) is involved in the shaping of the preforms (16) to form containers (21).

3. The method according to one of claims 1 to 2, wherein each holding element (32) holds the respective preform (16) at in each case a predefined position within the respective blow mould (22).

4. The method according to claim 3, wherein each preform (16) has a carrying ring (20), by means of which the preform (16) is deposited in the holding element (32) in such a way that a longitudinal axis (27) of the preform (16) is parallel to a longitudinal axis (26) of the mould carrier (12) and thus of the blow mould (22).

5. The method according to any one of claims 1 to 4, wherein the preforms (16) are fixed in the blow moulds (22) along an axis of symmetry (28) of the mould carrier (12) and/or axially relative to the longitudinal axis (26) of the mould carrier (12).

6. The method according to claim 5, wherein in each case a support element (42) assigned to the respective blow mould (22) fixes the respective preform (16) in the respective blow mould (22) axially relative to its longitudinal axis (27), the underside of the support element (42) holding and guiding the upper end of the preform (16).

7. A mould carrier (12) for at least one preform (16), wherein
the mould carrier (12) is arranged within a blow moulding machine (3) and
comprises at least one multi-part blow mould (22) and at least one holding element (32) for the preform (16); and in that the at least one holding element (32), and
in that the at least one holding element (32) forms at least part of the at least one multi-part blow mould (22) in the closed state of the mould carrier (12),
**characterized in that**
the holding element (32) consists of two movable holding elements halves (44), and
the holder (35) is formed in the closed state of the holding element (32), wherein a length of the inner edge (37) of the holder (35) is equal to at least half the circumference of the preform (16).

8. The mould carrier (12) according to claim 7, wherein a first end (33) of the holding element (32) is connected to a longitudinal axis (26) of the mould carrier (12) and a second end (34) of the holding element (32) has a holder (35) for the preform (16).

9. The mould carrier (12) according to claim 8, wherein the holder (35) holds the preform (16) at a carrying ring (20) of the preform (16).

10. The mould carrier (12) according to claim 9, wherein the holder (35) has a rest (38) and a stop (39) for the carrying ring (20), so that the carrying ring (20) rests against the rest (38) and is positioned by the stop (39) at its outer edge.

11. The mould carrier (12) according to claim 10, wherein the stop (39) is formed as a groove (40), so that the carrying ring (20) of the preform (16) is clamped into the groove (40) of the stop (39).

## Revendications

1. Procédé de transfert d'une pluralité de préformes (16) à une machine de soufflage (3) qui comprend une pluralité de supports de moules (12) dont chacun porte au moins un moule de soufflage (22) en plusieurs pièces, étant donné que les préformes (16) sont transférées le long d'une section de transfert (30) à la machine de soufflage (3), avec les étapes suivantes :
• au moins un des supports de moule (12) est ouvert dès que la section de transfert (30) est atteinte ;
• ensuite, au moins une préforme (16) se trouvant également à la section de transfert (30) est transférée à un élément de retenue (32) affecté au support de moule (12) ouvert ;
• ensuite, la préforme (16) est positionnée dans le au moins un moule de soufflage (22) du support de moule (12) ;
• ensuite, le support de moule (12) est fermé avec la préforme (16) qui est positionnée à son intérieur ;
• les étapes décrites ci-dessus sont exécutées pour chacune des préformes (16) qui sont alimentées dans la machine de soufflage (3) via la section de transfert (30) ; et
• une partie du moule de soufflage (22) est formée à l'état fermé du support
de moule (12) par l'élément de retenue (32) ;
**caractérisé**
• **en ce que** l'élément de retenue (32) se compose de deux moitiés d'élément de retenue (44) mobiles et en ce que, à l'état fermé de l'élément de retenue (32), l'attache (35) est formée, étant donné qu'une longueur du bord intérieur (37) de l'attache (35) est au moins égale à la moitié de la circonférence de la préforme (16).

2. Procédé selon la revendication 1, étant donné que chaque moule de soufflage (22) est fermé par au moins une partie d'une face inférieure de l'élément de retenue (32) correspondant et, ainsi, contribue à la transformation des préformes (16) en récipients (21).

3. Procédé selon l'une quelconque des revendications 1 à 2, étant donné que chaque élément de retenue (32) retient la préforme (16) respective à chaque fois une position prédéfinie au sein du moule de soufflage (22) respectif.

4. Procédé selon la revendication 3, étant donné que chaque préforme (16) a formé un anneau porteur (20) avec lequel la préforme (16) peut être déposée dans l'élément de retenue (32) de manière à ce qu'un axe longitudinal (27) de la préforme (16) soit parallèle à un axe longitudinal (26) du support de moule (12) et, ainsi, du moule de soufflage (22).

5. Procédé selon l'une quelconque des revendications 1 à 4, étant donné que les préformes (16) sont fixées le long d'un axe de symétrie (28) du support de moule (12) et/ou axialement par rapport à l'axe longitudinal (26) du support de moule (12) dans les moules de soufflage (22).

6. Procédé selon la revendication 5, étant donné que chaque fois un élément d'appui (42) affecté au moule de soufflage (22) respectif fixe la préforme (16) respective axialement par rapport à son axe longitudinal (27) dans le moule de soufflage (22) correspondant, étant donné que la face inférieure de l'élément d'appui (42) retient et guide l'extrémité supérieure de la préforme (16).

7. Support de moule (12) pour au moins une préforme (16), étant donné que
le support de moule (12) est disposé à l'intérieur d'une machine de soufflage (3) et
comprend au moins un moule de soufflage (22) en plusieurs pièces et au moins un élément de retenue (32) pour la préforme, et
le au moins un élément de retenue (32) forme au moins une partie du au moins un moule de soufflage (22) en plusieurs pièces à l'état fermé du support de moule (12),
**caractérisé en ce que**
l'élément de retenue (32) se compose de deux moitiés d'élément de retenue (44) mobiles, et
l'attache (35) est formée à l'état fermé de l'élément de retenue (32), étant donné qu'une longueur d'un bord intérieur (37) de l'attache (35) est au moins égale à la moitié de la circonférence de la préforme (16).

8. Support de moule (12) selon la revendication 7, étant donné qu'un première extrémité (33) de l'élément de retenue (32) est reliée à un axe longitudinal (26) du support de moule (12) et qu'une deuxième extrémité (34) de l'élément de retenue (32) a formé une attache (35) pour la préforme (16).

9. Support de moule (12) selon la revendication 8, étant donné que l'attache (35) retient la préforme (16) à un anneau porteur (20) de la préforme (16).

10. Support de moule (12) selon la revendication 9, étant donné que l'attache (35) a formé un appui (38) et un butée (39) pour l'anneau porteur (20), de manière à ce que l'anneau porteur (20) soit couché sur l'appui (38) et positionné à son bord extérieur par la butée (39).

11. Support de moule (12) selon la revendication 10, étant donné que la butée (39) est formée comme rainure (40), de manière à ce que l'anneau porteur (20) de la préforme (16) soit serré dans la rainure (40) de la butée (39).
